# EUROPEAN PATENT APPLICATION

(11) **EP 1 582 767 A2**
(43) Date of publication of application: **05.10.2005**
(21) Application number: 05005765.2
(22) Date of filing: 16.03.2005
(51) Int. Cl.: F16H 3/54, F16D 13/58, F16D 25/0638, F16H 37/02

(54) **Forward-reverse changeover mechanism for an automatic transmission**

(30) Priority: 30.03.2004 JP 2004101172
(71) Applicant: JATCO Ltd, Shizuoka 417-8585 (JP)
(72) Inventor: Asahina, Noboru, Fuji-shi, Shizuoka 417-8585 (JP); Doihara, Katsumi, Fuji-shi, Shizuoka 417-8585 (JP)
(74) Representative: Weber, Joachim

(57) **Abstract**

A forward-reverse changeover mechanism for an automatic transmission is disclosed. The automatic transmission has an input shaft (1) to which a torque is inputted and an output shaft from which a torque is outputted. The forward-reverse changeover mechanism is installed between the input shaft and the output shaft and controls a rotational direction of the output shaft with respect to a rotational direction of the input shaft. The forward-reverse changeover mechanism includes a clutch (5/6) that is engaged when rotation identical or reverse in direction to rotation of the input shaft (1) is transmitted to the output shaft; a piston (9/13) that controls engagement/disengagement of the clutch; and a ring-shaped spring (20) that is interposed between the clutch (5/6) and the piston (9/13) and receives a load from the piston (9/13), wherein the load causes a deformation of the ring-shaped spring (20). A spring constant (k) of the ring-shaped spring (20) switches according to an amount of the deformation of the ring-shaped spring (20).

## Description

### BACKGROUND OF THE INVENTION

This invention relates to an automatic transmission and a forward-reverse changeover mechanism for the automatic transmission.

A forward-reverse changeover mechanism disclosed in JP 09-32918 A published by the Japanese Patent Office in 1997 provides a ring-shaped spring (which is a belleville spring) between a clutch and a piston for controlling engagement of the clutch.

However, since the ring-shaped spring of the prior art has an invariable spring constant, a shock caused upon a reversal of a direction of torque transmission in shifting a position of a shift lever or an operational range of an automatic transmission in an order of a reverse range (R) → a neutral range (N) → a drive range (D) or in an order of D→N→R is increased. When this shock is suppressed, a time period consumed prior to an attainment of a required clutch capacity (i.e., a required torque that is transmitted by the clutch) is prolonged.

### SUMMARY OF THE INVENTION

It is an object of this invention to provide a forward-reverse changeover mechanism for an automatic transmission capable of reducing a shock caused upon reversing a direction of torque transmission while cutting down on a time period consumed prior to an attainment of a required clutch capacity.

In order to achieve the above object, this invention provides a forward-reverse changeover mechanism for an automatic transmission. The automatic transmission has an input shaft to which a torque is inputted and an output shaft from which a torque is outputted. The forward-reverse changeover mechanism is installed between the input shaft and the output shaft and controls a rotational direction of the output shaft with respect to a rotational direction of the input shaft. The forward-reverse changeover mechanism includes a clutch that is engaged when rotation identical or reverse in direction to rotation of the input shaft is transmitted to the output shaft; a piston that controls engagement/ disengagement of the clutch; and a ring-shaped spring that is interposed between the clutch and the piston and receives a load from the piston, wherein the load causes a deformation of the ring-shaped spring. A spring constant of the ring-shaped spring switches according to an amount of the deformation of the ring-shaped spring.

Preferably, the ring-shaped spring has a small spring constant when the amount of deformation of the ring-shaped spring is below a predetermined value and a large spring constant when the amount of deformation of the ring-shaped spring is equal to or above the predetermined value.

Preferably, the ring-shaped spring comprises a tall projection portion and a short projection portion which are different in height, and the spring constant of the ring-shaped spring switches when the piston or the clutch comes into contact with both of the tall projection portion and the short projection portion.

The details as well as other features and advantages of this invention are set forth in the remainder of the specification and are shown in the accompanying drawings.

### BRIEF DESCRIPTION OF THE DRAWINGS

FIG. 1 is a partial schematic diagram of an automatic transmission.

FIG. 2 is a partial schematic diagram of the automatic transmission.

FIG. 3 is a front view of a ring-shaped spring.

FIG. 4 is a side view of the ring-shaped spring.

FIG. 5 is an illustrative view of the compressed ring-shaped spring to be compressed.

FIG. 6 is an illustrative view of the compressed ring-shaped spring.

FIG. 7 is a graph of the spring characteristic of the ring-shaped spring, more specifically, the relationship between the load applied from a piston to the ring-shaped spring and the amount of deformation of the ring-shaped spring (or the amount of displacement of the piston) in the direction in which the load is applied.

FIG. 8A is a time chart showing how the position of a shift lever changes with the lapse of time. FIG. 8B is a time chart showing how the torque of a drive shaft changes with the lapse of time. FIG. 8C is a time chart showing how a command value for hydraulic pressure changes with the lapse of time. FIG. 8D shows the relationship between the load applied to the ring-shaped spring and the amount of deformation of the ring-shaped spring in the direction in which the load is applied. FIG. 8E is a time chart showing how the capacity of a clutch changes with the lapse of time.

FIG. 9 shows the spring characteristic of the ring-shaped spring as to the prior art and an embodiment of this invention, more specifically, the relationship between the load applied from the piston to the ring-shaped spring and the amount of deformation of the ring-shaped spring in the direction in which the load is applied (i.e. in the thickness direction of the ring-shaped spring).

### DETAILED DESCRIPTION OF THE PREFERRED EMBODIMENT

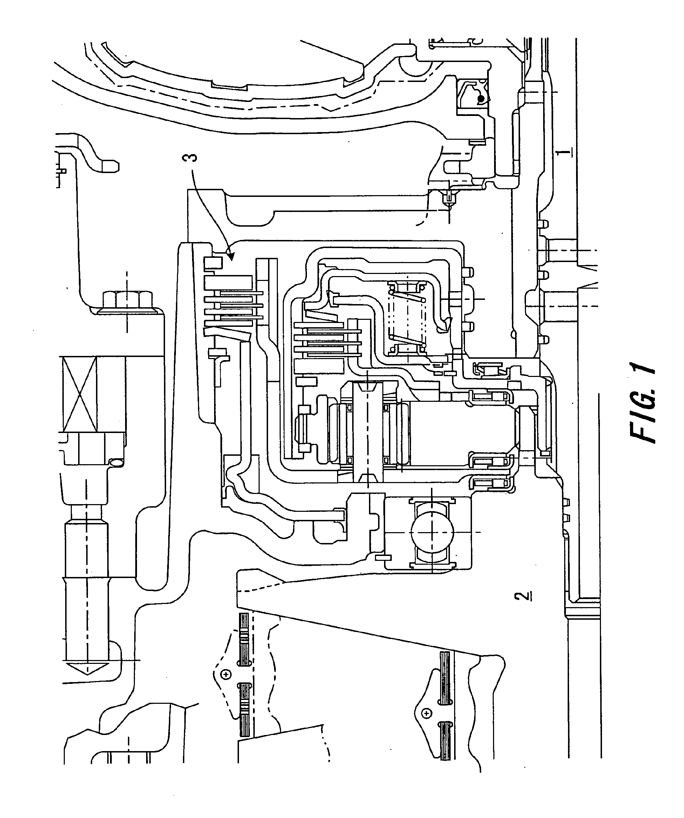

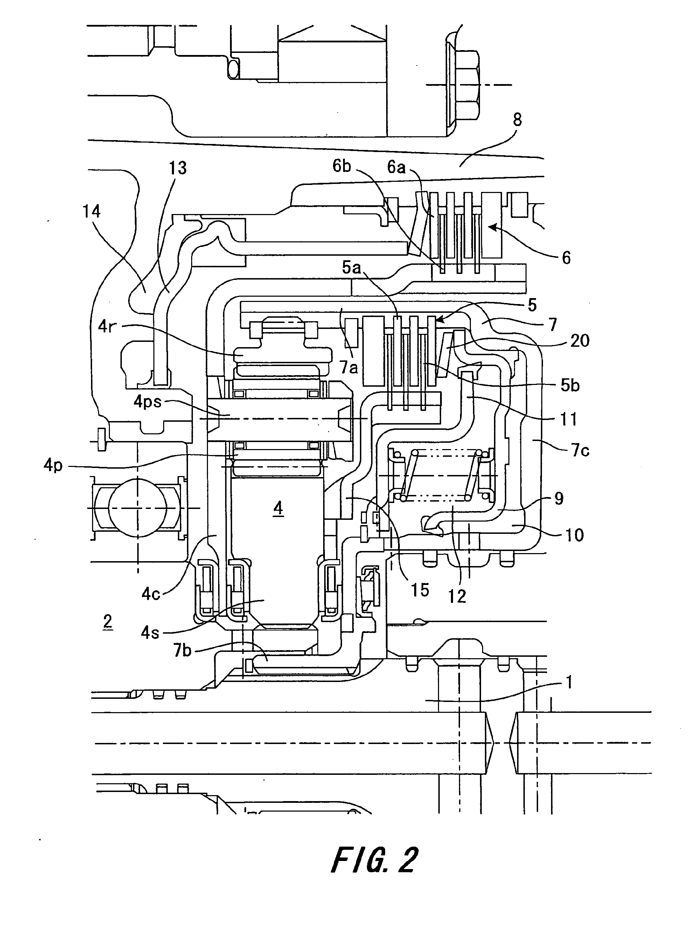

FIGS. 1 and 2 partially illustrate a V-belt-type continuously variable transmission to which this invention is applied.

The V-belt-type continuously variable transmission, which has an input shaft 1 to which a torque is transmitted from an engine (i.e., a power source), transmits rotation of the input shaft 1 to an output shaft (not shown) through conversion of rotational speed. A torque is outputted from the output shaft to driving wheels. The V-belt-type continuously variable transmission comprises a primary pulley, a secondary pulley, and a V-belt hung between the primary pulley and the secondary pulley. A forward-reverse changeover mechanism 3, which controls the rotational direction of rotation transmitted from the input shaft 1 to a fixed pulley 2 of the primary pulley, is installed between the input shaft 1 and the fixed pulley 2. Although the automatic transmission of this invention is described as a V-belt-type continuously variable transmission in this embodiment, this invention is not limited to this type of automatic transmission.

Referring to FIG. 2, the forward-reverse changeover mechanism 3 is composed of a planetary gear pair 4 and two clutches (a forward clutch 5 and a reverse clutch 6). The forward-reverse changeover mechanism 3 controls the rotational direction of the output shaft with respect to the rotational direction of the input shaft. When the forward clutch 5 is engaged and the reverse clutch 6 is not engaged, rotation identical in direction to that of the input shaft 1 is transmitted to the output shaft (not shown). On the other hand, when the reverse clutch 6 is engaged and the forward clutch 5 is not engaged, rotation reverse in direction to that of the input shaft 1 is transmitted to the fixed pulley 2 of the primary pulley.

The forward-reverse changeover mechanism 3 will now be described in detail. A ring gear 4r of the planetary gear pair 4 is coupled to the inside of a cylindrical outer wall 7a of a forward clutch drum 7, which is formed to be coaxial with the input shaft 1 by means of spline. An inner wall 7b of the forward clutch drum 7 is also formed to be cylindrical and coaxial with the input shaft 1. The inner wall 7b is spline-fitted to the input shaft 1.

A driven plate 5a (axially displaceable member) of the forward clutch 5 is spline-coupled to the inside of the outer wall 7a of the forward clutch drum 7. On the other hand, a drive plate 5b (axially fixed member) capable of engaging with the driven plate 5a is fixed to a hub 15 coupled to a sun gear 4s of the planetary gear pair 4. The driven plate 5a and the drive plate 5b are structured by being laminated in a direction parallel to the input shaft 1. In other words, the forward clutch 5 is a multiple disc clutch. The sun gear 4s is connected to the fixed pulley 2.

A pinion shaft 4ps supporting a pinion 4p of the planetary gear pair 4 is fixed to a carrier 4c, which is fixed to a case 8 of the automatic transmission via the reverse clutch 6. As is the case with the forward clutch 5, the reverse clutch 6 is also a multiple disc clutch.

The forward clutch drum 7 comprises the outer wall 7a, the inner wall 7b, and a lateral wall 7c connecting them at their ends. A piston 9 is installed in the forward clutch drum 7. The piston 9 presses the forward clutch 5 (the driven plate 5a in particular) parallel to the input shaft via a ring-shaped spring 20. The ring-shaped spring 20 may be a belleville spring or a dished spring. The piston 9 moves in the direction of the input shaft due to a hydraulic pressure in an oil chamber 10 formed between the piston 9 and the lateral wall 7c of the forward clutch drum 7. The piston 9 presses the forward clutch 5 and generates a frictional force between the driven plate 5a and the drive plate 5b. Owing to engagement of the forward clutch 5, the engine power transmitted to the input shaft 1 is transmitted to the sun gear 4s. Oil is supplied to the oil chamber 10 from an oil passage 1a formed in the input shaft 1.

The ring-shaped spring 20 is installed between the driven plate 5a and the piston 9. The ring-shaped spring 20 mitigates a shock caused by contact of the piston 9 with the driven plate 5a, and smoothens engagement of the driven plate 5a with the drive plate 5b. The detailed shape of this ring-shaped spring 20 will be described later.

A hub 11, which is fixed to the forward clutch drum 7 and slides along the inner surface of the piston 9 via a seal, is installed. A spring 12 pressing the forward clutch drum 7 in the direction of the input shaft is installed between the hub 11 and the forward clutch drum 7. The spring 12 urges the piston 9 away from the forward clutch 5. When the forward clutch 5 is disengaged, no oil is supplied to the oil chamber 10, the hydraulic pressure in the oil chamber 10 decreases, and the spring 12 causes the piston 9 to move away from the forward clutch 5 so as to disengage the forward clutch 5. This is because the urging force of the spring 12 exceeds a force originating from the hydraulic pressure in the oil chamber 10 and causing the piston 9 to move toward the forward clutch 5.

A piston 13, which presses the reverse clutch 6 and generates a frictional force between the driven and drive plates 6a and 6b of the reverse clutch 6, is installed in the case 8. The supply of oil to an oil chamber 14 between the case 8 and the piston 13 causes the piston 13 to press the reverse clutch 6 and engages it. A spring (not shown) is provided to disengage the reverse clutch 6.

The structure of the ring-shaped spring 20 used in the automatic transmission structured as described above will now be described.

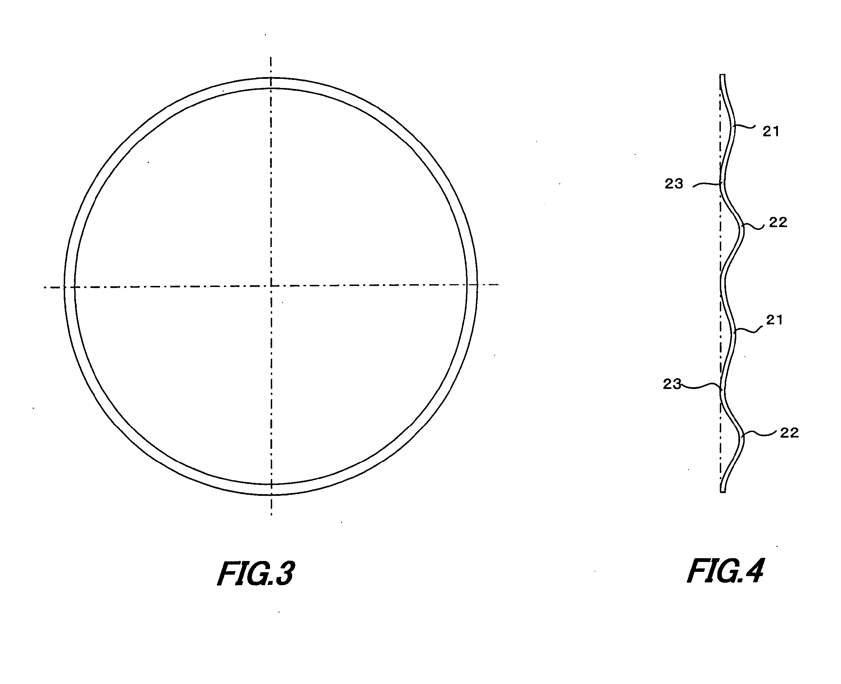

FIGS. 3 to 7 illustrate the detailed shape and characteristic of the ring-shaped spring 20 of this invention. The ring-shaped spring 20 shown in FIGS. 3 to 5 is an annular ring made of a corrugated steel plate with a certain thickness. For example, the thickness of the steel plate is a few millimeters (e.g. 2.0 mm). In side view, the ring-shaped spring 20 is corrugated with a series of projections (or threads) and depressions (or grooves) extending in the thickness direction. The corrugated ring-shaped spring 20 has two types of projection portion different in height, that is, a first contact portion 21 and a second contact portion 22 shorter in height than the first contact portion 21, and depression portions 23 formed to be flush with one another. The depression portions 23 are in contact with the driven plate 5a.

As described above, since the ring-shaped spring 20 is installed between the driven plate 5a and the piston 9, movement of the piston 9 resulting from a hydraulic pressure deforms the ring-shaped spring 20 in the direction of the input shaft and allows it to show a predetermined spring characteristic.

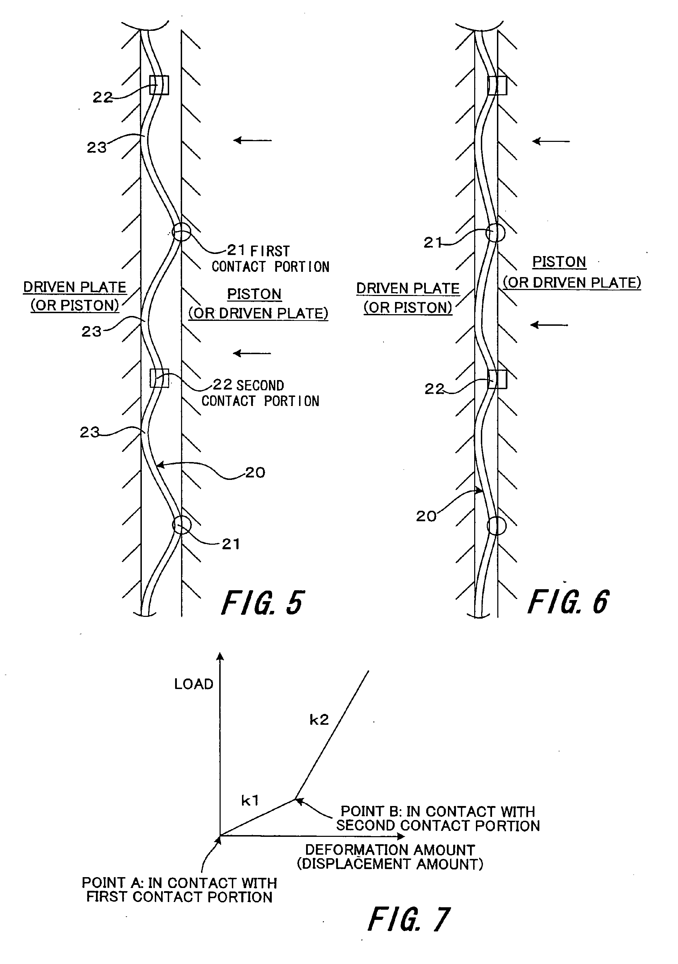

Referring to FIG. 5, the piston 9 presses the first contact portion 21 of the ring-shaped spring 20 toward the driven plate and deforms the ring-shaped spring 20. At first, the ring-shaped spring 20 exhibits a first spring constant k1 of the smaller value as shown in FIG. 7. Then, as shown in FIG. 6, the piston 9 further presses the ring-shaped spring 20 toward the driven plate. Thereafter, when the piston 9 comes into contact with the second contact portion 22, the spring constant k of the ring-shaped spring 20 changes to a second spring constant k2 which is greater than the first spring constant k1. The ring-shaped spring 20 has a small spring constant when the amount of deformation of the ring-shaped spring in the thickness direction (or the amount of displacement of the piston) is below a predetermined value and a large spring constant when the amount of deformation of the ring-shaped spring in the thickness direction (or the amount of displacement of the piston) is equal to or above the predetermined value. The predetermined value for the amount of deformation may be close to the difference in height between two types of projection portion. Because the ring-shaped spring 20 is thus provided with the two types of contact portions 21 and 22 different in height, the spring constant k of the ring-shaped spring 20 switches from the first spring constant k1 of the smaller value to the second spring constant k2 of the greater value as soon as the piston 9 comes into contact with the second contact portion 22.

Namely, the ring-shaped spring 20 has a corrugated steel plate with a certain thickness as described above. The corrugated steel plate has two types of projection portion different in height. The more elevated projection portion (or tall projection portion) is the first contact portion 21, and the less elevated projection portion (or short projection portion) is the second contact portion 22. The height of projection portions may be of the same order as the thickness of the steel plate. For example, the height of the more elevated projection portion is 3 millimeters and the height of the less elevated projection portion is 2 millimeters. When the piston 9 moves, it first comes into contact with the taller projection portion, that is, the first contact portion 21. At this moment, the piston 9 is in contact only with the first contact portion and not with a large area. Therefore, the pressure applied to the first contact portion is high. Thus, the amount of deformation of the first contact portion 21 is great. In other words, the spring constant of the ring-shaped spring 20 is small when the piston 9 is in contact only with the first contact portion 21. Given that the amount of deformation of the ring-shaped spring 20 (or the amount of displacement of the piston) is constant, the small spring constant causes only a small force to act on the driven plate 5a and thus allows only a small torque to be transmitted by the forward clutch 5. Consequently, a shock caused upon engaging the forward clutch 5 is reduced.

When the piston 9 further moves and comes into contact with the second contact portion 22, it is actually in contact with the first and second contact portions 21 and 22 of the ring-shaped spring 20. Therefore, the pressure applied to each of the contact portions is low. Thus, the amount of deformation of each of the contact portions is small. In other words, the spring constant of the ring-shaped spring 20 is great when the piston 9 is in contact with the first and second contact portions. Hence, given that the amount of deformation of the ring-shaped spring 20 is constant, an increase in spring constant leads to an increase in the force acting on the driven plate 5a. Thus, the torque that can be transmitted by the forward clutch 5 (i.e., the capacity of the forward clutch 5) is rapidly enhanced when the piston 9 is in contact with the first and second contact portions.

Although the corrugated ring-shaped spring is used in this embodiment to obtain two different spring constants, that is, a great spring constant and a small spring constant, this is not obligatory. For instance, a coil spring may be used instead to achieve variable spring characteristics. Further, although the first contact portion 21 and the second contact portion 22 are alternately formed in the ring-shaped spring 20 of this embodiment, this is not obligatory. It goes without saying that the numbers and heights of the first and second contact portions 21 and 22 and the material and thickness of the ring-shaped spring are adjusted to gain a desired spring characteristic.

At the early stage of engagement of the driven plate 5a of the forward clutch 5 with the drive plate 5b, the load from the piston 9 is transmitted to the driven plate 5a via the ring-shaped spring 20 with the smaller spring constant k1. Therefore, only a small torque can be transmitted. Thus, when a changeover between forward and reverse ranges is made with a reversal of the direction of torque transmission, that is, when the operational range of the transmission is shifted in the order of R→N→D or D→N→R, a shock is reduced. Moreover, since the spring constant of the ring-shaped spring 20 is switched from the spring constant k1 of the smaller value to the spring constant k2 of the greater value after the piston 9 has come into contact with the second contact portion 22 of the ring-shaped spring 20, the time consumed prior to complete engagement of the forward clutch 5 is reduced.

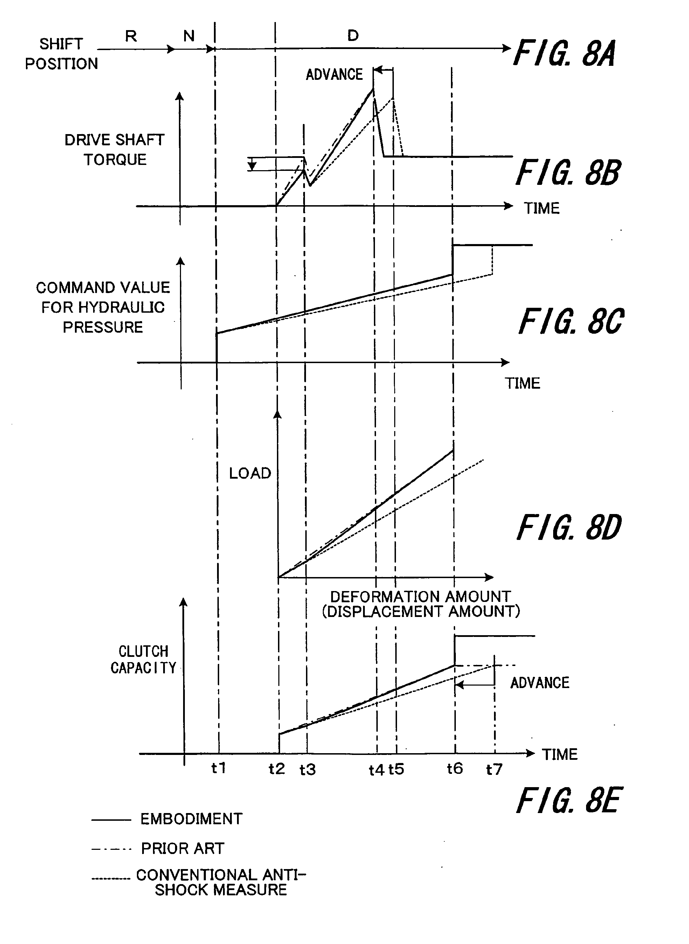

Referring to FIG. 8, the effect of the ring-shaped spring 20 will be described. In FIG. 8, the characteristic obtained when the ring-shaped spring 20 of this embodiment is used is indicated by a solid line. The characteristic of the prior art is indicated by an alternate long and short dash line, and the characteristic obtained when a ring-shaped spring with a conventional anti-shock measure is used is indicated by a broken line. The following description will focus on an example in which a changeover between the forward and reverse shift ranges is made in the order of R→N→D. With the conventional anti-shock measure, the ring-shaped spring has only the spring constant k1 of the smaller value.

Referring to FIG. 8A, the shift lever is switched from N to D at a time t1, and a command value as a command to raise the hydraulic pressure in the oil chamber 10 is outputted from a controller (not shown). Referring to FIG. 8E, the capacity of the clutch (i.e., the torque that can be transmitted) increases with a delay after the outputting of the command value, namely, at a time t2. Referring to FIG. 8B, a fluctuation in the drive shaft torque, that is, a shock is caused at this moment, and the shock reaches its peak at a time t3. However, since the ring-shaped spring 20 has the first spring constant k1 of the smaller value from the time t2 to the time t3, the peak of the shock in this invention is lower than that in the prior art. This is because the small spring constant serves to suppress the application of a load from the piston 9 to the forward clutch 5 and reduce the torque transmitted to the drive shaft.

After the time t3 when the shock reaches its peak, the spring constant of the ring-shaped spring 20 switches to the second spring constant k2 of the greater value. As in the case of the prior art, a required clutch capacity is ensured at a time t5. Further, since the spring constant of the ring-shaped spring 20 switches to the second spring constant k2 after the shock has passed its peak, a time t7 at which a required clutch capacity is reached with the conventional anti-shock measure can be advanced to a time t6 which is equivalent to that of the prior art.

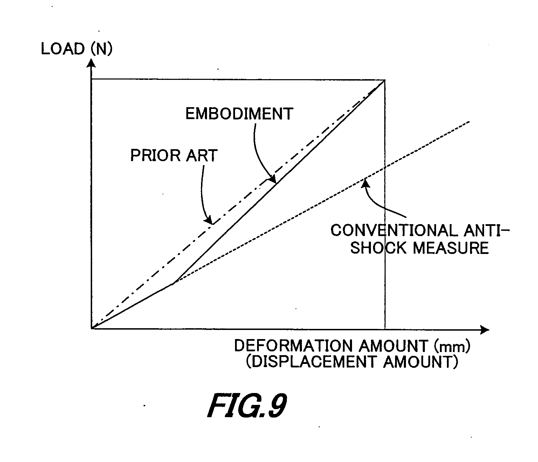

FIG. 9 shows a comparison between the spring characteristic of the ring-shaped spring of the prior art and the spring characteristic of the ring-shaped spring 20 of this embodiment. As is apparent from FIG. 9, before the piston 9 comes into contact with the second contact portion 22, the spring constant of the ring-shaped spring of this embodiment is smaller than that of the ring-shaped spring of the prior art, and substantially equal to that of the ring-shaped spring with the conventional anti-shock measure. After the piston 9 has come into contact with the second contact portion 22, the spring constant of the ring-shaped spring of this embodiment is set greater than that of the ring-shaped spring of the prior art.

Therefore, when the ring-shaped spring 20 having the two types of projection portion different in height (the first and second contact portions 21 and 22) as in the case of this embodiment is used, the spring constant is switches in accordance with the amount of deformation of the ring-shaped spring 20 in the thickness direction or the amount of the displacement of the piston 9. Because the spring constant k1 of the ring-shaped spring 20 is small before the piston 9 comes into contact with the second contact portion 22, a shock caused upon changing over from one shift range to another (e.g., a shock caused at the time t3 in FIG. 6) can be suppressed.

On the other hand, because the spring constant of the ring-shaped spring 20 is switched to the spring constant k2 of the greater value after the piston 9 has come into contact with the second contact portion 22, the capacity of the clutch can be swiftly enhanced. Thus, the time lag from the time (t1) when the shift lever is switched from N to D to the time when the clutch capacity required for engagement of the forward clutch 5 is secured, can be held substantially equal to that of the prior art.

By thus changing the spring characteristic of the ring-shaped spring in two stages, a shock caused upon changing over from one shift range to another is reduced, and the time consumed prior to the securement of a required clutch capacity is prevented from increasing.

Although the invention has been described above by reference to a certain embodiment of the invention, the invention is not limited to the embodiments described above.

Although the ring-shaped spring 20 is installed between the piston 9 and the driven plate 5a of the forward clutch 5 in the above embodiment, a shock caused during a changeover between the forward and reverse shift ranges (especially during a changeover in the order of D→N→R) can be reduced by installing the ring-shaped spring between the driven plate 6a of the reverse clutch 6 and the piston 13. In other words, the ring-shaped spring 20 may be installed between the piston 9 and the driven plate 5a of the forward clutch 5 and/or between the driven plate 6a of the reverse clutch 6 and the piston 13.

In the above embodiment, the piston 9 presses the first contact portion 21 and/or the second contact portion 22 while the depression portions 23 are in contact with the driven plate 5a. However, the first contact portion 21 and/or the second contact portion 22 presses the driven plate 5a of the clutch while the depression portions 23 may be in contact with the piston 9 (see FIG. 5). That is, the depression portions 23 may be provided on the piston side, and the first contact portion 21 and the second contact portion 22 may be provided on the clutch side.

Modifications and variations of the embodiments described above will occur to those skilled in the art, in light of the above teachings. The scope of the invention is defined with reference to the following claims.

The entire contents of Japanese Patent Application P2004-101172 (filed March 30, 2004) are incorporated herein by reference.

## Claims

1. A forward-reverse changeover mechanism for an automatic transmission, the automatic transmission comprising an input shaft (1) to which a torque is inputted and an output shaft from which a torque is outputted, the forward-reverse changeover mechanism being installed between the input shaft and the output shaft and controlling a rotational direction of the output shaft with respect to a rotational direction of the input shaft, the forward-reverse changeover mechanism comprising:
a clutch (5/6) that is engaged when rotation identical or reverse in direction to rotation of the input shaft (1) is transmitted to the output shaft;
a piston (9/13) that controls engagement/disengagement of the clutch; and
a ring-shaped spring (20) that is interposed between the clutch (5/6) and the piston (9/13) and receives a load from the piston (9/13), wherein the load causes a deformation of the ring-shaped spring (20);
wherein a spring constant (k) of the ring-shaped spring (20) switches according to an amount of the deformation of the ring-shaped spring (20).

2. The forward-reverse changeover mechanism as defined in claim 1, wherein the ring-shaped spring (20) has a small spring constant (k1) when the amount of deformation of the ring-shaped spring (20) is below a predetermined value and a large spring constant (k2) when the amount of deformation of the ring-shaped spring (20) is equal to or above the predetermined value.

3. The forward-reverse changeover mechanism as defined in claim 1,
wherein the ring-shaped spring (20) comprises a tall projection portion (21) and a short projection portion (22) which are different in height, and
wherein the spring constant (k) of the ring-shaped spring (20) switches when the piston (9/13) or the clutch (5/6) comes into contact with both of the tall projection portion (21) and the short projection portion (22).

4. The forward-reverse changeover mechanism as defined in claim 1, wherein the ring-shaped spring (20) comprises a tall projection portion (21) and a short projection portion (22), wherein the tall and short projection portions (21,22) are different in height and can come into contact with the piston (9/13) or the clutch (5/6) during operation thereof.

5. The forward-reverse changeover mechanism as defined in claim 4,
wherein the ring-shaped spring (20) is corrugated.

6. The forward-reverse changeover mechanism as defined in claim 4, wherein the ring-shaped spring (20) has a small spring constant (k1) when the piston (9/13) or the clutch (5/6) is in contact with only the tall projection portion (21) and a large spring constant (k2) when the piston (9/13) or the clutch (5/6) is in contact with both the tall and short projection portions (21,22).

7. The forward-reverse changeover mechanism as defined in claim 1, wherein the spring constant (k) of the ring-shaped spring (20) switches according to an amount of the displacement of the piston (9/13).

8. The forward-reverse changeover mechanism as defined in claim 7, wherein the ring-shaped spring (20) has a small spring constant (k1) when the amount of displacement of the piston (9/13) is below a predetermined value and a large spring constant (k2) when the amount of displacement of the piston (9 / 13) is equal to or above the predetermined value.

9. The forward-reverse changeover mechanism as defined in claim 8,
wherein the ring-shaped spring (20) comprises a tall projection portion (21) and a short projection portion (22) which are different in height, and
wherein the piston or the clutch comes into contact with the tall projection portion and the short projection portion when the amount of displacement of the piston (9/13) becomes the predetermined value.

10. An automatic transmission comprising the forward-reverse changeover mechanism according to claim 1.
